# EUROPÄISCHE PATENTSCHRIFT

(11) **EP 1 036 813 B1**
(45) Veröffentlichungstag und Bekanntmachung des Hinweises auf die Patenterteilung: **24.11.2004**
(21) Anmeldenummer: 99810244.6
(22) Anmeldetag: 18.03.1999
(51) Int. Cl.: C08J 7/04, B32B 27/10

(54) **Sperrschichtfolien**
Films with barrier layers
Films à couches barrières

(43) Veröffentlichungstag der Anmeldung: 20.09.2000
(73) Patentinhaber: Amcor Flexibles Schüpbach AG, 3400 Burgdorf (CH)
(72) Erfinder: Utz, Helmar, 3425 Koppigen (CH)
(74) Vertreter: BOVARD AG - Patentanwälte

(56) Entgegenhaltungen:
- EP-A- 0 680 823
- EP-A- 0 792 846
- PATENT ABSTRACTS OF JAPAN vol. 98, no. 08, 30. Juni 1998 (1998-06-30) & JP 10 072659 A (TOYO METALLIZING CO LTD), 17. März 1998 (1998-03-17)
- PATENT ABSTRACTS OF JAPAN vol. 96, no. 02, 29. Februar 1996 (1996-02-29) & JP 07 266490 A (REIKO CO LTD), 17. Oktober 1995 (1995-10-17)

## Beschreibung

Die Erfindung betrifft Mehrschichtsysteme aus einem polymeren Trägermaterial und zwei weiteren Schichten, die hervorragende Sperreigenschaften gegenüber Gasen, Wasserdampf, Aroma- und Geruchsstoffen aufweisen. Das Mehrschichtsystem weist zusätzlich eine Papier- oder Pappeschicht auf, die durch die Klebewirkung der zweiten Schicht verbunden ist. Derartige Mehrschichtsysteme können im Verpackungsbereich (z. B. Hohlkörper, Platten und Folien) aber auch für technische Anwendungen (z. B. Membranen oder Schutzschichten) verwendet werden.

Besonders im Verpackungsbereich werden zum Schutz von Füllgütern häufig Folien benötigt, die sehr gute Sperreigenschaften gegenüber Gasen, Wasserdampf, Aroma- und Geruchsstoffen aufweisen (z. B. Piringer, O.: Verpacken von Lebensmitteln. Eignung, Wechselwirkung, Sicherheit. Weinheim: VCH, 1993). Die geforderten Sperreigenschaften werden zum Beispiel durch Einsatz von Aluminium oder Barrierekunststoffen wie PVDC oder EVOH in Verbundfolien erreicht. Auch werden seit einigen Jahren orientierte Sperrschichtfolien aus z. B. Polypropylen oder Polyester, die mit dünnen anorganischen Schichten mittels Vakuumbeschichtungstechniken versehen wurden, verwendet (z. B. Krug, T; Ludwig, R.; Steiniger, G.: New transparent barrier coatings. Vortrag auf: The Second Leybold Symposium on Vacuum Web Coating for Packaging Materials. Leybold AG, Hanau, 1992). Als nachteilig hat sich bei diesen Beschichtungen allerdings erwiesen, dass die Folien gegenüber mechanischen Beanspruchungen sehr empfindlich sind, d.h., dass die Barriereeigenschaften deutlich schlechter werden.

In der europäischen Patentanmeldung EP 0 792 846 A1 wird beschrieben, dass durch das Aufbringen eines anorganisch-organischen Hybridpolymers auf die dünnen anorganischen Schichten, die Barriereeigenschaften dieser Folien erheblich verbessert werden können. Die sogenannten Hybridpolymere werden aus Silanen (Monomere) hergestellt. Die Monomere werden dabei nach dem Auftragen mittels Wärme oder Strahlungsenergie vernetzt. Aufgrund der eigentlichen Polymerbildung nach dem Auftragen, kann eine Reaktion mit der aufgedampften Schicht stattfinden, wodurch gute Haftungswerte erreichbar sind. Die eingesetzten organofunktionellen Silane haben allerdings den Nachteil, dass sie sehr teuer sind und deren Herstellung umweltbelastend ist.

In der europäischen Patentanmeldung EP 680 823 wird ein mehrschichtiges Laminat beschrieben, das aus einem Kunststoffsubstrat, einem dünnen Film aus Metall oder Metalloxid und einer auf dem dünnen Film aufgetragenen Schicht besteht. Die Schicht besteht aus ausgewählten Harzzusammensetzungen auf Basis von Polyvinylalkohol.

Das beschriebene Laminat hat gute Barriereneigenschaften gegen sauerstoffhaltige Gase und besitzt gute Eigenschaften für die Zurückhaltung von Aromen.

Es ist Aufgabe der vorliegenden Erfindung, mit einer Sperrschicht versehene Trägermaterialien bereitzustellen, die mit einer Schicht aus Papier- oder Pappe verbunden sind, und die in ihrer Herstellung kostengünstig und umweltverträglich sind.

Gegenstand der vorliegenden Erfindung sind somit die im Patentanspruch 1 definierten, mit einer Sperrschicht versehenen, Trägermaterialien.

Bei der vorliegenden Erfindung wird ein bezüglich den Barriereeigenschaften ähnlicher Effekt wie durch die in der oben genannten europäischen Patentanmeldung beschriebenen Beschichtungen erzielt (Sauerstoffdurchlässigkeiten von <0.1 cm³/(m² d bar) bei 23 °C/0 % r. F. und ein nur sehr geringes Erhöhen der Durchlässigkeit nach mechanischen Beanspruchungen), indem ein Hochpolymer (Polyvinylalkohol aus wässriger Lösung) auf die Sperrschicht (z. B. AIOx, SiOx oder Al) der Trägerfolie (z. B. PETP, OPA oder OPP) aufgebracht wird. Überraschenderweise wurde nämlich festgestellt, dass organische Polymere mit einer Vielzahl von OH-Gruppen wie Polyvinylalkohol, Ethylenvinyalalkohol-Coplymer (EVOH), Polysaccharide wie Pullulan oder Stärke oder Polypeptide wie gegebenenfalls modifizierte Geiatine ausgezeichnet z. B. auf AIOx oder SiOx haften. Bereits 0.8 g/m² Polyvinylalkohol reichen dabei beispielsweise aus, um die beschriebenen Verbesserungen bezüglich Barriere und Empfindlichkeit zu erhalten. Besonders vorteilhaft beim Einsatz von Polyvinylalkohol aus wässriger Lösung sind die vergleichsweise geringen Kosten sowohl des Barrierepolymers als auch des Lösungsmittels Wasser sowie die geringe Umweltbelastung. Ein weiterer Vorteil besteht darin, dass Polyvinylalkohol gut bedruckbar ist und somit beim Druckprozess wie ein Primer aufgetragen werden kann. Da Polyvinylalkohol sehr gut auf Papier haftet, dient dieser auch als Barriereleim, um Verbundfolien auf Basis von Papier herzustellen. Auch kann Karton oder Pappe eingesetzt werden. Um die Beständigkeit einer Polyvinylalkoholschicht gegenüber Feuchtigkeit zu verbessern, kann diese z. B. mit Melaminharz oder Aldehyden vernetzt werden (siehe z. B. in Römpps Chemielexikon, 9. Auflage, Thieme Verlag Stuttgart, S. 3578 und 4898). Zum Verbessern der Haftungseigenschaften können gegebenenfalls Silane zugesetzt werden.

Als Trägermaterialien für die erfindungsgemässe Beschichtung bieten sich sämtliche Polymere (z. B. Polyamide wie Polyamid-6 oder MXD6, Polyolefine wie Polyethylen oder Polypropylen, Polyester wie Polyethylenterephthalat oder Polyethylennaphthalat, Zellglas, eiweiss- oder stärkehaltige Polymere) an, die mit dünnen anorganischen Schichten mittels Vakuumbeschichtungstechniken versehen werden können. Die Trägermaterialien können in Form von Folien (1 µm bis etwa 500 µm), Platten (>500 µm), Formkörpern, Hohlkörper, Membranen oder auch Beschichtungen eingesetzt werden.

Als mittels Vakuumbeschichtungstechniken (sowohl PVD- und CVD-Prozesse d. h. "physical vapour deposition" und "chemical vapour deposition" als auch Plasmapolymerisationsverfahren) aufgebrachte dünne anorganische Schichten (5 bis 1000 nm) kommen rein oder als Mischung z. B. in Frage: Aluminium, Aluminiumoxide, Magnesium, Magnesiumoxid, Silizium, Siliziumoxide, Titan, Titanoxide, Zinn, Zinnoxide, Kohlenstoff. Derartige Mehrfachschichten sind auch gut geeignet.

Durch die Kombination von mit dünnen anorganischen Schichten versehenen Trägerschichten und Polyvinylalkohol (0.1 bis 10 g/m² bevorzugt 0.6 bis 1.5 g/m²) als Basis können Verbunde hergestellt werden, die z. B. PVDC- oder Aluminiumfolien-haltige Verbunde ersetzen. Sie können lichtundurchlässig aber auch transparent sein.

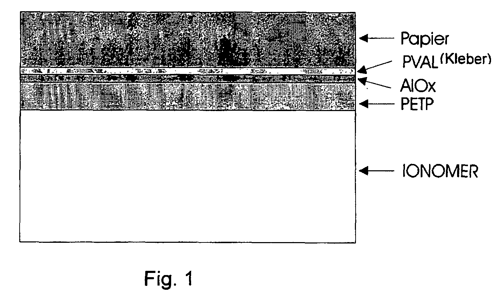

Die vorliegende Erfindung wird durch das nachstehende Beispiel und die Zeichnung näher erläutert. Es werden folgende Abkürzungen verwendet:
- PVAL =: Polyvinylalkohol
- AlOₓ =: Aluminiumoxid
- PETP =: Polyethylenen terephthalat

### Ausführungsbeispiel (Fig.)

Kraftpapier (z. B. 40 g/m²) wird mit einer PVAL-Lösung, die als Leim dient, gegen die AlOx-Seite einer bedampften PETP-Folie (AlOx etwa 25 nm, PETP z. B. 12 µm) geklebt. Die unbeschichtete PETP-Seite wird mit einem Primer versehen und z. B. mit einem lonomer extrusionsbeschichtet (z. B. 40 g/m²). Der Verbund hat eine Sauerstoffdurchlässigkeit von <0.1 cm³/(m² d bar) bei 23 °C/0 % r. F und kann als siegelfähige Verpackungsfolie verwendet werden.

## Patentansprüche

1. Mit einer Sperrschicht versehenes Trägermaterial auf welches eine erste und eine zweite Schicht aufgetragen ist, worin die erste Schicht eine anorganische Sperrschicht und die zweite Schicht eine Schicht aus einem organischen Polymeren mit einer Vielzahl von OH-Gruppen ist, **dadurch gekennzeichnet, dass** auf die erste Schicht Polyvinylalkohol als zweite Schicht aufgetragen ist, mit welchem eine weitere aus Papier oder Pappe bestehende Schicht verbunden ist.

2. Mit einer Sperrschicht versehenes Trägermaterial nach Anspruch 1 **dadurch gekennzeichnet, dass** die anorganische Sperrschicht aus mindestens einem Material besteht, das ausgewählt ist aus der Gruppe Aluminium, Aluminiumoxide, Magnesium, Magnesiumoxid, Silizium, Siliziumoxide, Titan, Titanoxide, Zinn, Zinnoxide und Kohlenstoff.

3. Mit einer Sperrschicht versehene Trägermaterialien nach Anspruch 1 oder 2, **dadurch gekennzeichnet, dass** die anorganische Sperrschicht eine Ein- oder Mehrfachschicht ist, mit einer Schichtdicke im Bereich von 5 bis 1000 nm, vorzugsweise 10 bis 100 nm, z. B. 25 nm.

4. Mit einer Sperrschicht versehenes Trägermaterial nach einem der Ansprüche 1 bis 3, **dadurch gekennzeichnet, dass** die Polyvinylalkoholschicht in einer Menge von 0,1 bis 10 g/m², vorzugsweise von 0,6 bis 1,5 g/m², z.B. 0,8 g/m² aufgetragenen ist.

## Claims

1. Substrate provided with a barrier layer, on which substrate a first and a second layer is applied, wherein the first layer is an inorganic barrier layer and the second layer is a layer made of an organic polymer with a multiplicity of OH groups, **characterised in that** applied on the first layer is polyvinyl alcohol as the second layer, to which a further layer is connected of paper or cardboard.

2. Substrate provided with a barrier layer according to claim 1, **characterised in that** the inorganic barrier layer is composed of at least one material which is selected from the group aluminium, aluminium oxide, magnesium, magnesium oxide, silicon, silicon oxide, titanium, titanium oxide, tin, tin oxide and carbon.

3. Substrates provided with a barrier layer according to claim 1 or 2, **characterised in that** the inorganic barrier layer is a single or multiple layer with a layer thickness in the range of 5 to 1000 nm, preferably 10 to 100 nm, e.g. 25 nm.

4. Substrate provided with a barrier layer according to one of the claims 1 to 3, **characterised in that** the polyvinyl alcohol is applied in a quantity of 0.1 to 10 g/m², preferably 0.6 to 1.5 g/m², e.g. 0.8 g/m².

## Revendications

1. Matériau support pourvu d'une couche barrière, sur lequel une première couche et une deuxième couche sont appliquées, la première couche étant une couche barrière inorganique, et la deuxième couche étant une couche constituée d'un polymère organique ayant un grand nombre de groupes OH, **caractérisé en ce que**, sur la première couche, on a appliqué du poly(alcool vinylique) en tant que deuxième couche, à laquelle est assemblée une autre couche, constituée de papier ou de carton.

2. Matériau support pourvu d'une couche barrière selon la revendication 1, **caractérisé en ce que** la couche barrière inorganique est constituée d'au moins un matériau qui est choisi dans l'ensemble comprenant l'aluminium, les oxydes d'aluminium, le magnésium, l'oxyde de magnésium, le silicium, les oxydes de silicium, le titane, les oxydes de titane, l'étain, les oxydes d'étain et le carbone.

3. Matériaux supports pourvus d'une couche barrière selon la revendication 1 ou 2, **caractérisés en ce que** la couche barrière inorganique est une structure monocouche ou multicouche, avec une épaisseur de couche comprise dans la plage de 5 à 1000 nm, de préférence de 10 à 100 nm, par exemple égale à 25 nm.

4. Matériau support pourvu d'une couche barrière selon l'une des revendications 1 à 3, **caractérisé en ce que** la couche de poly(alcool vinylique) est appliquée en une quantité de 0,1 à 10 g/m², de préférence de 0,6 à 1,5 g/m², par exemple de 0,8 g/m².
